# FASCICULE DE BREVET EUROPEEN

(11) **EP 2 915 427 B1**
(45) Date de publication et mention de la délivrance du brevet: **04.10.2017**
(21) Numéro de dépôt: 15156446.5
(22) Date de dépôt: 25.02.2015
(51) Int. Cl.: A01N 59/16, A01N 43/24, A01P 9/00

(54) **Composition et appât molluscicides, procédé de lutte contre des mollusques nuisibles**
Molluskizide Zusammensetzung und molluskizider Köder, Verfahren zur Bekämpfung von schädlichen Weichtieren
Molluscicide composition and bait, method for controlling harmful molluscs

(30) Priorité: 05.03.2014 FR 1451774
(43) Date de publication de la demande: 09.09.2015
(73) Titulaire: De Sangosse, 47480 Pont Du Casse (FR)
(72) Inventeur: Mercier, Frédéric, 47600 MONTAGNAC-SUR-AUVIGNON (FR)
(74) Mandataire: Cabinet BARRE LAFORGUE & associés

(56) Documents cités:
- WO-A1-97/26789
- WO-A1-99/39576
- US-A- 4 765 979

## Description

L'invention concerne une composition, dite composition molluscicide, pour lutter contre des mollusques nuisibles, un appât comprenant une telle composition molluscicide et un procédé de lutte contre des mollusques nuisibles dans lequel on utilise un tel appât.

Une composition molluscicide trouve des applications industrielles dans les domaines de l'agriculture, du jardinage amateur et de l'horticulture dans lesquels sont recherchées des solutions pour protéger les productions agricoles végétales vis-à-vis de mollusques nuisibles.

On connaît déjà des compositions ou appâts dédiés à la lutte contre des mollusques nuisibles.

On connait en particulier de WO 99/39576 une composition molluscicide comprenant un composé métallique simple, un additif choisi dans le groupe formé de l'acide éthylène diamine disuccinique (EDDS), de ses isomères, de ses sels, des complexes métalliques de l'acide éthylène diamine disuccinique et de leurs mélanges et un matériau comestible pour les mollusques. Selon WO 99/39576, une telle composition peut comprendre un ingrédient molluscicide coactif qui peut être du métaldéhyde. La proportion massique de l'ingrédient molluscicide coactif dans la composition peut être comprise entre 0,2 % et 5 %.

L'invention vise à améliorer l'efficacité molluscicide de compositions comprenant un tel composé métallique simple, un tel additif et un tel ingrédient coactif. En particulier, l'invention vise à obtenir une telle amélioration de l'efficacité d'une composition molluscicide pour une quantité réduite de composition molluscicide ingérée par les mollusques nuisibles.

L'invention vise donc à améliorer l'efficacité molluscicide de compositions molluscicides préexistantes, notamment des compositions molluscicides de WO 99/39576.

L'invention vise en particulier une telle composition permettant de diminuer la quantité de matière active appliquée par hectare de culture.

L'invention vise à proposer une composition de lutte contre des mollusques -notamment des mollusques nuisibles pour des plantes et/ou pour des cultures- et présentant une efficacité molluscicide maintenue pour une quantité de substance active ingérée par lesdits mollusques qui est diminuée.

L'invention vise aussi à proposer une telle composition qui est moins consommée par des mollusques nuisibles mais qui présente cependant une efficacité aussi élevée -voire plus élevée- que des compositions comprenant un métal et un agent chélatant pour la lutte contre des mollusques nuisibles.

L'invention vise aussi à proposer une composition de lutte contre des mollusques -notamment des mollusques nuisibles pour des plantes et/ou pour des cultures- qui soit susceptible de tuer des mollusques nuisibles plus rapidement -notamment après 3 à 4 jours de consommation de ladite composition-en comparaison avec des compositions connues. L'invention vise donc une composition de lutte contre des mollusques nuisibles à effet protecteur des plantes et de cultures qui soit rapide -notamment à effet immédiat-.

L'invention vise en outre à proposer une composition de lutte contre les mollusques nuisibles pour les plantes et/ou pour les cultures qui permette une protection durable et continue des plantes et des cultures vis-à-vis de mollusques nuisibles.

L'invention vise également et plus particulièrement à proposer une telle solution qui soit compatible avec les contraintes habituelles de fabrication, de stockage, de conservation et d'application d'une composition connue de lutte contre des mollusques nuisibles.

Pour ce faire, l'invention concerne une composition, dite composition molluscicide, létale par ingestion pour des mollusques nuisibles, comprenant à titre de matière active contre les mollusques nuisibles :
- au moins un composé, dit composé métallique, choisi dans le groupe formé de l'acétate de fer, du chlorure de fer, du phosphate de fer, du phosphate de fer et de sodium, du pyrophosphate de fer, du nitrate de fer, du sulfate de fer, du sulfate de fer et d'ammonium, des ferroprotéines, des sulfures de fer, du citrate de fer, des phosphates de glycérol et de fer, du citrate de choline et de fer, du citrate d'ammonium et de fer, du fumarate de fer, du gluconate de fer, du lactate de fer, des complexes de fer et de saccharose, des complexes de fer et de fructose, des complexes de fer et de dextrose, du succinate de fer, du tartrate de fer, de l'oxalate de fer, de l'ascorbate de fer et de l'aspartate de fer ;
- du métaldéhyde ;
caractérisée en ce que le métaldéhyde est présent dans la composition molluscicide avec une proportion massique comprise entre 0,5 % et 2 % -notamment comprise entre 0,5 % et 1,5 %, de préférence comprise entre 0,8 % et 1,2 %, plus préférentiellement de l'ordre de 1 %-.

Dans tout le texte :
- l'expression « composition molluscicide » désigne une composition apte à tuer des mollusques -notamment des mollusques nuisibles- et à limiter les ravages provoqués par lesdits mollusques nuisibles sur des végétaux et/ou sur des cultures desdits végétaux ;
- le métaldéhyde est le composé chimique de CAS (« *Chemical Abstracts Service* ») n° 108-62-3 et de formule suivante :

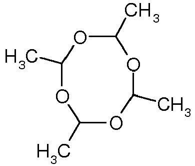

L'invention consiste donc en une composition comprenant, en combinaison :
- un ou plusieurs composé(s) métallique(s),
- du métaldéhyde en proportion massique dans la composition molluscicide comprise entre 0,5 % et 2 %.

L'invention vise donc une composition molluscicide comprenant au moins un composé métallique choisi dans le groupe formé de l'acétate de fer, du chlorure de fer, du phosphate de fer, du phosphate de fer et de sodium, du pyrophosphate de fer, du nitrate de fer, du sulfate de fer, du sulfate de fer et d'ammonium, des ferroprotéines, des sulfures de fer, du citrate de fer, des phosphates de glycérol et de fer, du citrate de choline et de fer, du citrate d'ammonium et de fer, du fumarate de fer, du gluconate de fer, du lactate de fer, des complexes de fer et de saccharose, des complexes de fer et de fructose, des complexes de fer et de dextrose, du succinate de fer, du tartrate de fer, de l'oxalate de fer, de l'ascorbate de fer et de l'aspartate de fer et du métaldéhyde dans une proportion massique choisie de façon non arbitraire pour augmenter l'efficacité de la composition molluscicide.

En effet, les inventeurs ont constaté de façon totalement inattendue et surprenante qu'une composition molluscicide comprenant au moins un tel composé métallique et du métaldéhyde dans une proportion massique comprise entre 0,5 % et 2 % provoque, chez des mollusques nuisibles ayant consommé cette composition molluscicide, une mortalité augmentée par rapport à des compositions molluscicides ne comprenant pas une telle proportion massique de métaldéhyde pour une quantité de composition molluscicide consommée réduite.

Le choix non arbitraire de cette proportion massique en métaldéhyde comprise entre 0,5 % et 2 % dans une composition molluscicide s'accompagne donc d'une diminution de la quantité de composition molluscicide ingérée par les mollusques nuisibles pour une efficacité molluscicide au moins conservée, voire augmentée. Une composition molluscicide selon l'invention est donc plus économique en matière active et plus respectueuse de l'environnement en diminuant la quantité de composition molluscicide nécessaire à l'obtention d'une efficacité acceptable.

Les inventeurs n'expliquent pas ce résultat surprenant tendant à démontrer un effet synergique du métaldéhyde et du composé métallique et permettant d'obtenir une efficacité molluscicide soutenue pour une quantité de matière active diminuée.

Avantageusement et selon l'invention, la composition molluscicide comprend au moins un agent, dit agent complexant, choisi dans le groupe formé des polyacides organiques -notamment des polyacides amino-carboxyliques, de préférence des polyacides amino-acétiques, des polyacides amino-succiniques, des polyacides amino-glutariques, des polyacides amino-aspartiques-, des sels de polyacide organique, des esters de polyacide organique et des mélanges en toutes proportions d'au moins deux d'entre eux.

En particulier, au moins un agent complexant est un composé apte à moduler la disponibilité du métal du composé métallique vis-à-vis des mollusques nuisibles.

Avantageusement et selon l'invention, au moins un agent complexant est choisi dans le groupe formé de l'EDTA (acide éthylène diamine-N,N,N',N'-tétraacétique), de l'EDTA Na₂Ca (sel calcique et disodique de l'acide éthylène diamine-N,N,N',N'-tétraacétique), de l'EDDS (acide éthylène diamine-N,N'-disuccinique), du DTPA (acide diéthylène triamine-N,N,N',N',N"-pentaacétique), du DTPA Na₅ (sel pentasodique de l'acide diéthylène triamine-N,N,N',N',N"-pentaacétique), du GLDA (acide L-glutamique-N,N-diacétique), du GLDA Na₂ (sel disodique de l'acide L-glutamique-N,N-diacétique), de l'HEDTA (acide éthylènediamine-N-hydroxyéthyl-N',N'-diacétique), de l'HEDTA Na3 (sel trisodique de l'acide éthylènediamine-N-hydroxyéthyl-N',N'-diacétique), du BAPTA (acide 1,2-bis(2-aminophénoxy)éthane-N,N,N',N'-tetraacétique), du BAPTA AM (ester acétoxyméthyl de l'acide 1,2-bis(2-aminophénoxy)éthane-N,N,N',N'-tétraacétique), de l'HEIDA (acide 2-hydroxyéthylamine-N,N-diacétique), de l'HEIDA Na₂ (2-hydroxyéthylamine-N,N-diacétate de sodium), du NTA (acide nitrilo-N,N,N-triacétique), du NTA Na₃ (sel trisodique de l'acide nitrilo-N,N,N-triacétique), de l'acide (S,S) propane-1,3-diamine-N,N'-disuccinique, de l'acide triéthylène-tétraamine-hexaacétique, de l'acide 2-aminoéthanesulfonique-N,N-diacétique, de l'IDA (acide imino-N,N-diacétique), de l'HIDS (acide hydroxyimino-N,N-disuccinique), de l'HIDS Na₄ (sel tétrasodique de l'acide hydroxyimino-N,N-disuccinique), de l'ADA (acide N-(2-Acétamido)imino-N,N-diacétique), de l'IDHA (acide-N-dicarboxyéthyle-D,L-aspartique), de l'EGTA (acide éthylène glycol-bis(2-aminoéthyléther)-N,N,N',N'-tétraacétique), de l'acide (S,S)-2-hydroxy-1,3-propane-N,N'-disuccinique, de l'acide (S,S)-2-hydroxy-1,3-propane-N,N'-diglutarique, du N-cinnamoyl-n-2,3-xylylhydroxylamine, du 1,1,1-tris-(3-hydroxy-2-oxo-dihydro-1-pyridylpropoxyméthyle) éthane, du N,N-diéthyle dithio carbamate d'ammonium, du DMSA (acide dimercaptosuccinique), de l'hydroxy-diméthyl-pyridone, de la tétraméthoxy-diméthylphosphine-bipyridine, du mélange de curcumine et de piperine, de la deferoxamine, de l'acide citrique, de l'acide diéthyle-glutarique, de l'acide 8-hydroxyquinoline-5-sulfonique, de la 1-méthyl-pyrolidone du sel hémicalcique de l'acide lactobionique, du epigallocatechine-3-gallate, de l'acide aspartique diéthoxysuccinate, du EDDPA (acide éthylène-diamine-dialkyle phosphonique), du EDTMP (acide éthylène-diamine-tétraméthylène phosphonique), du DTPMP (acide diéthylène-triamine-pentaméthylène phosphonique), du DTPMP Na (sel de sodium de l'acide diéthylène-triamine-pentaméthylène phosphonique), du EDDCHA (acide éthylène-diamine-N,N'-bis(5-carboxy-2-hydroxyphényl-acétique)), du EDDHA (acide éthylène-diamine-N,N'-bis(2-hydroxyphényl-acétique)), du EDDHMA (acide ethylène-diamine-N,N'-bis(*o*-hydroxy-*p*-methylphenyl acétique), du EDDHSA (acide ethylène-diamine-N,N'-bis(*o*-hydroxy-*p*-sulfophenyl acétique), du GLUDA (acide-N,N-diacétique glutamique), du HEEDTA (acide éthylène diamine-N-hydroxyéthyl-N,N'N'-triacétique), du LED3A (acide éthylène diamine-N-laurique-N,N'N'-triacétique), du CDTA (acide cyclohexyl-1,2-dinitro-N,N,N',N'-tetraacétique), du MGDA (acide méthylglycine diacétique), du MIDA (acide méthylimino diacétique), du O-TRENSOX (8-hydroxy-quinoléine et de ses trimères), des AcAc (acétylacétonates), de l'hydrazone de salicylalhéhyde isonicotinoyl, de l'acide (S,S)-1,2-éthylène-diamine-diglutarique, de l'acide (S,S)-1,3-propane-diamine-diglutarique, de l'entérochéline, du EDDM (acide éthylène-diamine-dimalonique), de l'EDDT (acide éthylène-diamine-ditartrique), de l'acide glutamique, de l'acide aspartique, de l'acide glycinamide-N,N-disuccinique, de l'hydrochlorure de 1,2-diéthyl-3-hydroxypyridin-4-one, de l'acide 2-(2-(2-hydroxy-benzyl)amino)ethylamino)-2-(2-hydroxyphenyl) acétique, de l'acide 2-méthyl-3-hydroxy-4-pyridine carboxylique, de l'acide 3-hydroxy-4-pyridine carboxylique, de la 3-hydroxy-4-pyridine carboxylique, d'un alginate, d'un glycinate, de la glycine, de l'hexadentate hydroxypyridinonate, de l'hexadentate pyridinone, des lignosulfonates, des aroylhydrazones lipophiles, du calcium(II)-acétyl-acétonate, du (1S,2S)1,2-bis(2-hydroxyphenyl)ethylène, des acides benzyl-hydroxamique alginiques, du disulfonate de catéchol, du citrate de choline, des acides D-glucopyranosiduroniques, des acides aminés, de la lysine, des acides méthyl-hydroxamique alginiques, de l'acide éthylène diamine N,N'-bis(2-hydroxy-5-méthylphenyl)-N,N'-diacétique, de la porphyrine tétracyclique, du trencan, de la trishydroxy pyridone, de la desferri-exochéline, du ciclopirox olamine, de l'acide éthylène-diamine-N,N'-bis(2-hydroxy-5-méthylbenzyl)-N,N'-diacétique (HJB), des lysinates, de l'acide L-aspartique-N,N-diacétique (ASDA), du sel tétrasodique de l'acide L-aspartique-N,N-diacétique (ASDA Na₄), du LTMP, du disulfide de tétraéthylthiuram, de l'acide phytique, de la silybin, des acides gluconiques, des acides humiques, d'Exjade®, de l'acide 2-{2-[(2-hydroxybenzyl)amino]éthylamino}-2-{2-hydroxyphenyl}acétique (DCHA), de la chitine, de la résine de chélaïne, de la déferroxamine, de la D-penicillamine, du 2,3-dimercapto-1-propanol, de 3-amino-1H-1,2,3-triazole, de l'acide mélitique, de la pyridylméthylamine, de l'acide 1-hydroxyéthan-1,1-diphosphonique (HEDP) et de l'acide amino-tris(méthylène sulfonique) (ATMP).

Avantageusement et selon l'invention, la matière active est présente dans la composition molluscicide avec une proportion massique comprise entre 0,5 % et 10 % -notamment comprise entre 2 % et 4 %-. La composition molluscicide comprend donc une proportion massique de matière active comprise entre 0,5 % et 10 %, ladite matière active étant formée du(des) composé(s) métallique(s), du(des) agent(s) complexant(s) et du métaldéhyde.

Avantageusement, dans un mode de réalisation préférentiel selon l'invention, au moins un composé métallique est choisi dans le groupe formé du phosphate de fer (II) ferreux et du phosphate de fer (III) ferrique. Il peut s'agir de phosphate de fer (II) ferreux de formule Fe₃(PO₄)₂ et de n°14940-41-1 dans la classification du « Chemical Abstract Service, CAS ».

Il peut aussi s'agir de phosphate de fer (III) ferrique de formule FePO₄-nH₂O, dans laquelle n représente le nombre de molécule d'eau associée à chaque molécule de phosphate de fer (III) ferrique. La valeur de n peut être égale à 0 ; il s'agit alors du phosphate de fer (III) ferrique anhydre (CAS 10045-86-0) ; elle peut être égale à 2 ; il s'agit alors du phosphate de fer (III) ferrique dihydraté (CAS n°13463-10-0) ; elle peut être égale à 4 ; il s'agit alors du phosphate de fer (III) ferrique tétrahydraté (CAS n°14940-41-1). Le phosphate de fer (II) ferreux et/ou le phosphate de fer (III) ferrique peuvent être sous une forme amorphe ou sous une forme cristalline, c'est-à-dire présentant un signal par analyse par diffraction des rayons X. Le phosphate de fer peut être sous forme de cristaux de maille orthorhombique ou monoclinique.

Avantageusement, le phosphate de fer est présent dans la composition sous la forme de particules solides de taille moyenne comprise entre 1 nm (particule nanométrique) et 30 µm.

Avantageusement et selon l'invention, la composition comprend du phosphate de fer (III) ferrique à titre d'unique composé métallique.

Avantageusement et selon l'invention, le composé métallique et l'agent complexant sont présents dans la composition molluscicide avec un rapport molaire du métal du composé métallique et de l'agent complexant (composé(s) métallique(s)/agent(s) complexant(s)) compris entre 1/0,1 et 1/10, plus particulièrement entre 1/0,5 et 1/5, notamment sensiblement de l'ordre de 1/1. Avantageusement, l'agent complexant est présent dans la composition molluscicide avec une proportion sensiblement équimolaire par rapport au métal du composé métallique.

Avantageusement et selon l'invention, le composé métallique est présent dans la composition molluscicide avec une proportion massique comprise entre 0,5 % et 5 %-notamment de l'ordre de ou égale à 2 %-.

Avantageusement et selon l'invention, la proportion massique de métaldéhyde dans la composition molluscicide est inférieure à la proportion massique du composé métallique dans la composition molluscicide.

Dans un mode de réalisation préférentiel, avantageusement et selon l'invention, la composition molluscicide comprend de l'ordre de 2 % en masse de phosphate de fer, de l'ordre de 4 % en masse d'EDTA et de l'ordre de 1 % en masse de métaldéhyde.

Dans un autre mode de réalisation préférentiel, avantageusement et selon l'invention, la composition molluscicide comprend de l'ordre de 1 % en masse de phosphate de fer, de l'ordre de 2 % en masse d'EDTA et de l'ordre de 1 % en masse de métaldéhyde.

La proportion massique de phosphate de fer dans la composition s'entend du rapport de la masse de phosphate de fer dans la composition rapportée à la masse de la composition.

Avantageusement et selon l'invention, la composition comprend au moins un excipient comestible pour les mollusques nuisibles.

Avantageusement et selon l'invention, l'excipient comestible est formé d'une préparation choisie dans le groupe formé des farines de céréale -notamment d'une farine de blé dur, d'une farine de blé tendre, d'une farine d'orge, d'une farine de maïs, d'une farine de sorgho-, des co-produits céréaliers, des farines de plante protéagineuse, des farines de plante oléagineuses, des farines de tubercule -par exemple de pomme de terre- et d'un mélange d'au moins deux d'entre eux.

Avantageusement et selon l'invention, la matière solide comprend une matière sucrée de stimulation de l'appétit des mollusques nuisibles.

L'invention s'étend par ailleurs à un appât de lutte contre des mollusques nuisibles comprenant une composition selon l'invention.

Avantageusement et selon l'invention, l'appât est sous forme d'un solide à l'état divisé. L'appât peut être sous la forme de granulés de masse moyenne comprise entre 5 mg et 500 mg.

Dans une première variante, avantageusement et selon l'invention, l'appât est sous forme de particules solides et le métaldéhyde est présent avec une proportion massique sensiblement constante dans tout le volume d'au moins une fraction des particules. En particulier, dans cette première variante d'un appât selon l'invention, le métaldéhyde est présent dans les particules (granulés) d'appât avec une distribution sensiblement homogène. En particulier, la proportion massique de métaldéhyde en surface des particules est identique à la proportion massique de métaldéhyde au coeur des particules.

Avantageusement, dans une deuxième variante selon l'invention, l'appât est sous forme de particules solides et le métaldéhyde est présent dans au moins une fraction -notamment dans la totalité- desdites particules avec une proportion massique variant dans le volume de ladite fraction de particules et vers l'intérieur de la matière solide de ladite fraction de particules. Il est possible que la proportion massique de métaldéhyde en surface des particules soit inférieure à la proportion massique de métaldéhyde au coeur des particules. En particulier, il est possible que le métaldéhyde soit présent dans les particules d'appât avec une proportion massique à coeur supérieure à la proportion massique de métaldéhyde en périphérie des particules. Dans cette deuxième variante d'un appât molluscicide selon l'invention, il est possible que le métaldéhyde soit présent dans les particules d'appât avec une proportion massique à coeur supérieure à la proportion massique de métaldéhyde en périphérie des particules, la proportion massique de métaldéhyde en périphérie étant nulle.

L'invention s'étend aussi à un procédé de lutte contre des mollusques nuisibles dans lequel on met une quantité d'appât selon l'invention à disposition de mollusques nuisibles sur une surface de culture agricole à traiter.

Avantageusement et selon l'invention, la quantité d'appât correspond à une quantité surfacique d'appât de l'ordre de 5 Kg/ha de surface de culture en agriculture. Les préparations commerciales à base de phosphate de fer connues présentent des doses homologuées d'application comprises entre 7 Kg/ha pour une préparation agricole à base de 3 % de phosphate de fer -soit 100 g de matière active par hectare- et 50 Kg/ha pour une préparation destinée à un usage en jardin d'amateur à base de 1 % de phosphate de fer -soit 500 g de matière active par hectare-.

L'invention vise aussi l'utilisation d'un appât selon l'invention pour lutter contre des mollusques -notamment des gastéropodes-nuisibles choisis dans le groupe formé :
- des limaces -notamment de la famille des *Limacidae,* de la famille des *Arionidae,* de la famille des *Milacidae,* plus particulièrement de l'espèce *Deroceras reticulatum*, de l'espèce *Arion hortensis,* de l'espèce *Arion ater agg,* de l'espèce *Milax gagates*-,
- des escargots terrestres des genres *Helix, Cernuel, Theba, Achatina,* -plus particulièrement de l'espèce *Helix aspersa,* de l'espèce *Cernuella virgata* et de l'espèce *Theba pisana-,* et ;
- des escargots aquatiques des genres *Biomphalaria, Lynea, Pomacea* -notamment *Pomacea canaliculata-.*

L'invention concerne également une composition, un appât pour lutter contre des mollusques nuisibles, un procédé de lutte et l'utilisation d'un tel appât caractérisés en combinaison par tout ou partie des caractéristiques mentionnées ci-dessus ou ci-après.

D'autres buts, caractéristiques et avantages de l'invention apparaîtront à la lecture de la description suivante et des exemples donnés uniquement à titre non limitatif.

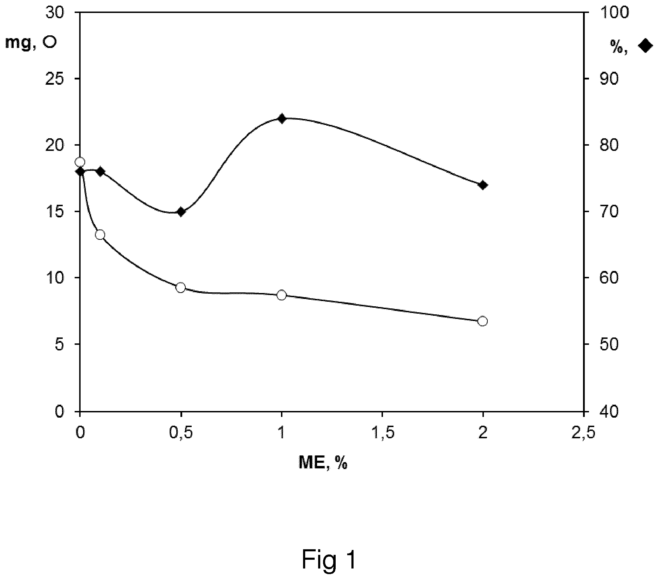

D'autres buts, caractéristiques et avantages de l'invention apparaîtront à la lecture de la description suivante et des exemples donnés uniquement à titre d'illustration non limitative et qui se réfèrent à la figure 1 représentant graphiquement des avantages procurés par une composition molluscicide selon l'invention.

### Confection des appâts

On pèse les quantités nécessaires de chacun des composants suivants de l'appât. Par exemple, on pèse :
- entre 80 g et 95 g d'un excipient (ou support) comestible pour des mollusques nuisibles, notamment choisi dans le groupe formé des farines de céréale, par exemple de farine de blé, de farine de maïs, de farine de riz, de farine de pomme de terre, de farine de pois et des co-produits de fabrication de ces farines de céréale ;
- 0,1 g à 10 g d'un composé métallique -par exemple du phosphate de fer- ;
- 0,1 g à 10 g d'un agent complexant choisi dans le groupe formé des polyacides organiques -par exemple de l'acide éthylène diamine-N,N,N',N'-tétraacétique (EDTA)-, dans une proportion molaire sensiblement égale à la proportion molaire du composé métallique ;
- 0,5 g à 2 g de métaldéhyde ;
- 0,01 g à 0,1 g d'un colorant ;
- 0,2 g à 2 g d'un acide organique conservateur choisi dans le groupe formé de l'acide sorbique, de l'acide citrique, de l'acide propionique et du benzoate de sodium ;
- 0,5 g à 5 g d'un additif appétent et/ou phagostimulant (stimulant de la nutrition), notamment choisi dans le groupe formé du sucrose, des édulcorants, des produits issus de la levure, des protéines animales -notamment des protéines du lait-et des co-produits du lait ;
- 0,001 g à 0,05 g d'un agent d'amertume, par exemple du benzoate de dénatonium, apte à limiter la consommation de l'appât molluscicide par des enfants et/ou des animaux domestiques non cible, et ;
- au moins un additif stabilisant choisi dans le groupe formé des hydrocolloïdes, de la paraffine et des protéines d'oeuf et apte à limiter -voire empêcher totalement- le délitement de l'appât.

Cet appât peut par exemple être fabriqué selon les étapes suivantes :
- pesée des différents ingrédients ;
- mélange des ingrédients au moyen d'un mélangeur à ruban ou d'un mélangeur intensif ;
- incorporation d'eau sous forme vapeur ou sous forme liquide et/ou de paraffine en quantité suffisante pour former une pâte homogène continue ;
- compression/extrusion de la pâte au travers d'une filière d'un extrudeur/thermocuiseur ;
- fragmentation des brins d'appât obtenus de façon à former des granulés d'appât unitaires et individualisés ;
- stabilisation des granulés par refroidissement et séchage en vue de leur stockage à température ambiante ;
- conditionnement des granulés en sachets adaptés aux usages envisagés en vue de leur commercialisation.

### Populations de limaces

Des limaces sauvages adultes et de taille homogène sont collectées sur des parcelles agricoles favorables au développement de leur population. Ces limaces sauvages sont maintenues dans des conditions d'élevage (température, humidité, éclairage, ventilation et alimentation) favorables à leur développement jusqu'à la réalisation des essais.

### Mortalité sur limaces en conditions contrôlées

25 boites d'essai contenant chacune une limace sont placées dans une enceinte climatique maintenue à une température comprise entre 10°C et 20°C, sous atmosphère contrôlée d'humidité relative comprise entre 60 % et 90 % et sous éclairage périodique. On place un granulé d'appât dans chaque boite d'essai. On dénombre au cours du temps les limaces mortes 3 et 8 jours après la mise en place de l'appât dans la boite d'essai. On note la quantité d'appât consommé par la limace dans chaque boite. On calcule le taux moyen de mortalité cumulé (TMMC, %) par dénombrement du nombre de limaces tuées sur la période (en nombre de jours) rapporté aux 25 limaces de départ.

### Mortalité sur limaces en conditions semi-contrôlées

Les essais en conditions semi-contrôlées sont réalisés dans des cages extérieures selon le protocole CEB n°48. On place 25 limaces dans une cage grillagée de forme carrée couvrant une surface au sol de 1 m². La terre du sol est travaillée de façon à présenter une surface sensiblement plane et tassée de façon à éviter l'enfouissement des limaces. On repique de 10 à 20 plants de salade dans la terre de chaque cage. Au centre de chaque cage, on dispose une tuile formant un refuge pour les limaces. On répartit de manière homogène sur la surface au sol de la cage une quantité d'appât correspondant à la dose d'appât appliquée par hectare. Par exemple, on applique 0,5 g d'appât par cage correspondant à une dose d'appât appliqué de 5 Kg/ha ou 0,7 g d'appât par cage correspondant à une dose d'appât appliqué de 7 Kg/ha. On dénombre les limaces mortes périodiquement après la mise en place de l'appât.

### EXEMPLE 1 - Essais comparatifs de la toxicité d'appâts selon l'invention sur limaces grises (Deroceras reticulatum) en conditions contrôlées

On évalue le TMMC, % observé suite à un traitement de limaces avec un appât exempt de matière active (contrôle), suite à un traitement avec un appât comprenant du métaldéhyde dans une proportion massique de 4 % (ME 4 %), suite à un traitement avec un appât comprenant du métaldéhyde en proportion massique de 2,5 % (ME 2,5 %), suite à un traitement avec un appât (appât de référence) comprenant du phosphate de fer dans une proportion massique de 3 % et de l'EDTA dans une proportion équimolaire par rapport au fer du phosphate de fer, suite à un traitement avec un appât selon l'invention (PFe 1 %/EDTA/ME 1 %) comprenant du phosphate de fer en proportion massique de 1 %, de l'EDTA dans une proportion équimolaire par rapport au fer du phosphate de fer et du métaldéhyde dans une proportion massique de 1 % et suite à un traitement avec un appât selon l'invention (PFe 2 %/EDTA/ME 1 %) comprenant du phosphate de fer dans une proportion massique de 2 %, de l'EDTA dans une proportion équimolaire par rapport au fer du phosphate de fer et du métaldéhyde dans une proportion massique de 1 %.

Les compositions des appâts sont données au tableau 1 ci-après dans lequel les pourcentages sont des pourcentages en masse et le rapport du fer du composé métallique sur l'agent complexant est un rapport molaire.

**Tableau 1**

| Composition | Appât | | | | | |
|---|---|---|---|---|---|---|
| | Contrôle | ME 4 % | ME 2,5 % | PFe/EDTA | PFe 1 %/EDTA/ ME 1 % | PFe 2 %/EDTA/ ME 1 % |
| Farine de blé | 100 % | 96 % | 97,5 % | 90,9 % | 96% | 93 % |
| Métaldéhyde | 0 | 4 % | 2,5 % | 0 | 1 % | 1 % |
| Phosphate de fer | 0 | 0 | 0 | 3 % | 1 % | 2 % |
| Fe/EDTA (mole) | nd | nd | nd | 1 | 1 | 1 |

| | | | | | | |
|---|---|---|---|---|---|---|
| (nd = non défni) | | | | | | |

Les résultats des essais de toxicité répétés trois fois sont donnés au tableau 2 ci-après dans lequel TMMC, % représente le taux de mortalité moyen cumulé et AC représente la valeur moyenne de la masse (en milligramme) d'appât consommé par chaque limace.

**Tableau 2 :**

| Matière active | Durée de l'essai | | |
|---|---|---|---|
| | 3 jours | 8 jours | |
| | TMMC, % | TMMC, % | AC, mg |
| Contrôle | 0 | 3 | 18,18 |
| ME 4 % | 10 | 81 | 6,72 |
| ME 2,5 % | 6 | 72 | 7,57 |
| PFe/EDTA | 58 | 92 | 9,97 |
| PFe 1 %/EDTA/ME 1 % | 28 | 79 | 4,43 |
| PFe 2 %/EDTA/ME 1 % | 64 | 91 | 4,21 |

| | | | |
|---|---|---|---|
| PFe = phosphate de fer ; EDTA = acide éthylène diamine N,N,N',N'-tétraacétique ; pourcentages en masse. | | | |

Les traitements des limaces avec des appâts comprenant du métaldéhyde à 2,5 %, ou du métaldéhyde à 4 % ou un mélange de phosphate de fer à 3 % et d'EDTA sont réalisés à titre comparatif de traitements avec des appâts selon l'invention. On obtient lors d'un traitement avec l'appât (PFe 2 %/EDTA/ME 1 % et PFe 1 %/EDTA/ME 1 %) selon l'invention, une mortalité moyenne des limaces après 8 jours de traitement qui est élevée et similaire à la mortalité observée avec l'appât PFe/EDTA de référence, mais avec des quantités (4,43 et 4,21 mg) d'appât selon l'invention consommé par les limaces qui est deux fois plus faible que la quantité (9,97 mg) de l'appât PFe/EDTA de référence consommé.

### EXEMPLE 2 - Toxicité sur limaces noires (Arion hortensis) en conditions contrôlées

On réalise des essais comparables aux essais réalisés à l'exemple 1 en conditions contrôlées en utilisant des limaces noires

Les résultats d'essais répétés trois fois sont donnés au tableau 3 ci-après dans lequel TMMC, % représente le taux de mortalité moyen cumulé et AC représente la valeur moyenne de la masse (en milligramme) d'appât consommé par chaque limace.

**Tableau 3**

| Matière active dans l'appât | Durée de l'essai | | |
|---|---|---|---|
| | 3 jours | 8 jours | |
| | TMMC, % | TMMC, % | AC, mg |
| Contrôle | 0 | 1 | 18,18 |
| ME 4 % | 12 | 78 | 9,16 |
| ME 2,5 % | 10 | 68 | 10,50 |
| PFe/EDTA | 14 | 80 | 9,21 |
| PFe 2 %/EDTA/ME 1 % | 11 | 79 | 7,95 |

On obtient, par traitement des limaces avec l'appât selon l'invention (PFe 2 %/EDTA/ME 1 %), une mortalité moyenne après 8 jours de traitement qui est similaire à la mortalité observée avec l'appât PFe/EDTA de référence ou avec les appâts ME 4% ou ME 2,5%, mais avec une quantité (7,95 mg) moyenne d'appât consommé par les limaces qui est plus faible que la quantité (9,21 mg) d'appât PFe/EDTA, que la quantité (10,50 mg) d'appât ME 2,5% et que la quantité (9,16 mg) d'appât ME 4% consommés par les limaces.

### EXEMPLE 3 - Toxicité sur limaces grises en conditions semi-contrôlées

Les résultats des essais répétés cinq fois sont donnés au tableau 4 ci-après dans lequel TMMC, % représente le taux de mortalité moyen cumulé et MA (en g/ha) représente la masse (en gramme) de matière active (phosphate de fer ou métaldéhyde ou phosphate de fer et métaldéhyde) appliquée par hectare de surface traitée.

**Tableau 4**

| Matière active | MA, g/ha | Durée du traitement | | | |
|---|---|---|---|---|---|
| | | 4 jours | | 8 jours | |
| | | TMMC, % | Ratio | TMMC, % | Ratio |
| Contrôle | 0 | 8,8 | nd | 18 | nd |
| ME 4 % | 200 | 61,6 | 0,308 | 73 | 0,365 |
| ME 2,5 % | 125 | 58 | 0,464 | 70 | 0,56 |
| PFe/EDTA | 210 | 68,4 | 0,326 | 82 | 0,39 |
| PFe 2 %/EDTA/ME 1 % | 150 | 65 | 0,433 | 73 | 0,49 |

| | | | | | |
|---|---|---|---|---|---|
| (nd : non défini) | | | | | |

On obtient par traitement de limaces avec l'appât selon l'invention (PFe 2 %/EDTA/ME 1 %), un taux de mortalité moyen cumulé (TMMC, %) après 4 jours et 8 jours de traitement qui est légèrement inférieur (65 % et 73 % respectivement) au taux de mortalité observé avec l'appât PFe/EDTA (68,4 % et 82 % respectivement) de référence, mais avec une quantité (150 g/ha) de matière active (MA) appliquée qui est plus faible que la quantité (210 g/ha) de matière active de l'appât PFe/EDTA de référence. Les colonnes « Ratio » du tableau 4 présentent les valeurs du TMMC, % rapporté à la quantité de matière active (MA) appliquée et traduisant l'efficacité de l'appât. Ces résultats démontrent l'avantage en terme d'efficacité procuré par l'appât (PFe 2 %/EDTA/ME 1 %) selon l'invention par rapport à un appât comprenant uniquement du phosphate de fer à titre de matière active.

### EXEMPLE 4 - Toxicité sur limaces grises en conditions semi-contrôlées

Les résultats des essais de toxicité sur limaces en conditions semi-contrôlées répétés trois fois sont donnés au tableau 5 ci-après dans lequel TMMC, % représente le taux de mortalité moyen cumulé et MA (en g/ha) représente la masse (en gramme) de matière active (phosphate de fer ou métaldéhyde ou phosphate de fer et métaldéhyde) appliquée par hectare de surface traitée.

**Tableau 5**

| Matière active dans l'appât | MA, g/ha | Durée du traitement | | | |
|---|---|---|---|---|---|
| | | 4 jours | | 8 jours | |
| | | TMMC, % | Ratio | TMMC, % | Ratio |
| Contrôle | 0 | 2 | nd | 6 | nd |
| PFe/EDTA | 210 | 57 | 0,271 | 82 | 0,39 |
| PFe 2 %/EDTA/ME 1 % | 150 | 69 | 0,46 | 82 | 0,55 |

| | | | | | |
|---|---|---|---|---|---|
| (nd : non défini) | | | | | |

On obtient par traitement de limaces avec l'appât selon l'invention (PFe 2 %/EDTA/ME 1 %), un TMMC, % après 4 jours qui est supérieur (69 %) au TMMC, % après 4 jours obtenu avec l'appât PFe/EDTA de référence. En outre, on obtient avec l'appât selon l'invention, une valeur de TMMC, % après 8 jours qui est similaire au TMMC, % obtenu lors d'un traitement avec l'appât PFe/EDTA de référence, mais avec une quantité de matière active appliquée (150 g/ha) qui est plus faible que la quantité de matière active (210 g/ha) appliquée avec l'appât PFe/EDTA de référence. Les colonnes « Ratio » du tableau 5 présentent les valeurs du rapport entre le taux de mortalité moyen cumulé (en %) et la quantité de matière active appliquée traduisant l'efficacité de l'appât. Ces résultats démontrent l'avantage en termes d'efficacité procuré par un appât selon l'invention.

### EXEMPLE 5 - Toxicité sur limaces noires en conditions semi-contrôlées

Les résultats des essais répétés deux fois sont donnés au tableau 6 ci-après dans lequel TMMC représente le taux de mortalité moyen cumulé et MA (en g/ha) représente la masse (en gramme) de matière active (phosphate de fer ou métaldéhyde ou phosphate de fer et métaldéhyde) appliquée par hectare de surface traitée.

**Tableau 6**

| Matière active dans l'appât | MA, g/ha | Durée du traitement | | | |
|---|---|---|---|---|---|
| | | 4 jours | | 8 jours | |
| | | TMMC, % | Ratio | TMMC, % | Ratio |
| Contrôle | 0 | 2 | nd | 3 | nd |
| PFe/EDTA | 210 | 24 | 0,11 | 61 | 0,29 |
| PFe 2%/EDTA/ME 1% | 150 | 53 | 0,35 | 72 | 0,48 |

| | | | | | |
|---|---|---|---|---|---|
| (nd : non défini) | | | | | |

On obtient lors de traitement de limaces avec des appâts selon l'invention, un taux de mortalité moyen cumulé (TMMC, %) des limaces après 4 jours et après 8 jours de traitement qui est supérieur au TMMC, % observé lors du traitement des limaces avec l'appât PFe/EDTA de référence, et avec une quantité d'appât selon l'invention appliqué (150 g/ha) qui est plus faible que la quantité d'appât (210 g/ha) comprenant uniquement du phosphate de fer à titre de substance active.

Les colonnes « Ratio » du tableau 6 présentent les valeurs du TMMC, % rapporté à la masse de matière active (MA) appliquée et traduisant l'efficacité de l'appât. Ces résultats démontrent l'avantage procuré par un appât selon l'invention sur le traitement de mollusques nuisibles.

### EXEMPLE 6 - Toxicité d'un appât comprenant du métaldéhyde (ME) à titre d'unique matière active sur limaces grises en conditions contrôlées.

Les résultats des essais répétés deux fois dans des conditions contrôlées sont donnés au tableau 7 ci-après dans lequel TMMC, % représente le taux de mortalité moyen cumulé et AC représente la valeur moyenne de la masse (en milligramme) d'appât consommé par chaque limace.

**Tableau 7**

| ME, % | Mesure à 8 jours | |
|---|---|---|
| | TMMC, % | AC, mg |
| 0 | 0 | 18,00 |
| 1 | 18 | 13,04 |
| 2,5 | 58 | 11,18 |
| 4 | 78 | 9,89 |

L'augmentation de la proportion massique de métaldéhyde dans l'appât s'accompagne d'une augmentation du taux de mortalité moyen cumulé des limaces grises et d'une diminution de la consommation de l'appât.

Pour rappel, la quantité moyenne d'appât (PFe 1 %/EDTA/ME 1 % et PFe 2 %/EDTA/ME 1%) selon l'invention consommé (AC) par des limaces grises (tableau 2) est respectivement de 4,43 mg par limace et 4,21 g par limace. Ces quantités d'appât consommé par les limaces est faible par rapport à la quantité d'appât comprenant uniquement du métaldéhyde à 1 %, pour une efficacité molluscicide beaucoup plus élevée.

### EXEMPLE 7 - Toxicité d'appâts sur limaces grises en conditions contrôlées

Les résultats des essais répétés deux fois sont représentés en figure 1 et au tableau 8 ci-après dans lequel TMMC, % représente le taux de mortalité moyen cumulé et ACR représente la valeur moyenne de la masse (en milligramme) d'appât consommé par une limace et rapportée à la masse (en gramme) de ladite limace.

**Tableau 8**

| PFe 2% + EDTA/ME, % | Mesure à 8 jours | |
|---|---|---|
| | TMMC, % | ACR, mg/g |
| 0 | 76 | 18,62 |
| 0,1 | 76 | 13,25 |
| 0,5 | 70 | 9,29 |
| 1 | 84 | 8,72 |
| 2 | 74 | 6,74 |

L'augmentation de la proportion massique de métaldéhyde (ME) dans l'appât comprenant du phosphate de fer (2 %) et de l'EDTA en proportion équimolaire par rapport au fer du phosphate de fer s'accompagne d'une augmentation du TMMC, % des limaces grises à 8 jours de consommation jusqu'à 84 % pour une proportion de métaldéhyde de 1 % et d'une diminution de la quantité moyenne d'appât consommé (AC) par chaque limace traduisant un effet synergique du phosphate de fer et du métaldéhyde, en particulier en proportion massique de 1 % (ME).

### EXEMPLE 8 - Toxicité d'appâts à base de phosphate de fer à titre de matière active et d'EDTA en proportion équimolaire par rapport au fer de phosphate de fer sur des limaces grises en conditions contrôlées.

Les résultats des essais illustrant les performances d'appâts comprenant uniquement du phosphate de fer à titre de matière active et répétés deux fois sont donnés au tableau 9 ci-après dans lequel TMMC, % représente le taux de mortalité moyen cumulé et AC représente la valeur moyenne de la masse (en milligramme) d'appât consommé par chaque limace.

**Tableau 9**

| PFe % + EDTA | Mesure à 8 jours | |
|---|---|---|
| | TMMC, % | AC, mg |
| 0 | 0 | 18,00 |
| 1 | 20 | 14,00 |
| 2 | 68 | 13,44 |
| 3 | 88 | 13,30 |

L'augmentation de la proportion massique de phosphate de fer dans l'appât comprenant de l'EDTA en proportion équimolaire par rapport au fer du phosphate de fer s'accompagne d'une augmentation du taux de mortalité moyen cumulé des limaces grises jusqu'à 88 % pour une proportion de phosphate de fer de 3 % mais d'une diminution très faible de la consommation moyenne de l'appât entre 1 % et 3 % de phosphate de fer.

### EXEMPLE 9 - Toxicité d'appâts comprenant du phosphate de fer sur limaces grises en conditions contrôlées

Les résultats des essais répétés deux fois sont donnés au tableau 10 ci-après dans lequel TMMC représente le taux de mortalité moyen cumulé et AC représente la valeur moyenne de la masse (en milligramme) d'appât consommé par chaque limace.

**Tableau 10**

| Matière active | | Mesure à 8 jours | |
|---|---|---|---|
| ME, % | PFe, % | TMMC, % | AC, mg |
| 0 | 0 | 0 | 18,00 |
| 3 | 0 | 68 | 5,67 |
| 0 | 3 % | 90 | 6,02 |
| 1 | 1 % | 80 | 3,57 |
| 1 | 2 % | 88 | 3,78 |
| 1,5 | 1,5 % | 80 | 5,04 |

L'introduction de métaldéhyde avec une proportion massique de 1 % dans un appât comprenant du phosphate de fer (PFe) dans une proportion massique de 1 %, 1,5 % ou 2 % conduit à une valeur de TMMC élevée -respectivement 80 %, 88 % et 80 %- mais avec une masse d'appât consommé qui est réduite (respectivement 3,57 mg, 3,78 mg et 5,04 mg) et inférieure à la masse d'appât consommé (6,02 mg) exempt de métaldéhyde.

## Revendications

1. Composition, dite composition molluscicide, létale par ingestion pour des mollusques nuisibles, comprenant à titre de matière active contre les mollusques nuisibles :
- au moins un composé, dit composé métallique, choisi dans le groupe formé de l'acétate de fer, du chlorure de fer, du phosphate de fer, du phosphate de fer et de sodium, du pyrophosphate de fer, du nitrate de fer, du sulfate de fer, du sulfate de fer et d'ammonium, des ferroprotéines, des sulfures de fer, du citrate de fer, des phosphates de glycérol et de fer, du citrate de choline et de fer, du citrate d'ammonium et de fer, du fumarate de fer, du gluconate de fer, du lactate de fer, des complexes de fer et de saccharose, des complexes de fer et de fructose, des complexes de fer et de dextrose, du succinate de fer, du tartrate de fer, de l'oxalate de fer, de l'ascorbate de fer et de l'aspartate de fer ;
- du métaldéhyde ;
**caractérisée en ce que** le métaldéhyde est présent dans la composition molluscicide avec une proportion massique comprise entre 0,5 % et 2 %.

2. Composition selon la revendication 1, **caractérisée en ce qu'**elle comprend au moins un agent, dit agent complexant, choisi dans le groupe formé des polyacides organiques, des sels de polyacide organique, des esters de polyacide organique et des mélanges en toutes proportions d'au moins deux d'entre eux.

3. Composition selon l'une des revendications 1 ou 2, **caractérisée en ce que** la matière active est présente dans la composition molluscicide avec une proportion massique comprise entre 0,5 % et 10 %.

4. Composition selon l'une des revendications 2 à 3, **caractérisée en ce que** le composé métallique et l'agent complexant sont présents dans la composition molluscicide avec un rapport molaire du métal du composé métallique et de l'agent complexant compris entre 1/0,1 et 1/10.

5. Composition selon l'une des revendications 1 à 4, **caractérisée en ce que** le composé métallique est présent dans la composition molluscicide avec une proportion massique comprise entre 0,5 % et 5 %.

6. Composition selon l'une des revendications 1 à 5, **caractérisée en ce que** la proportion massique de métaldéhyde dans la composition molluscicide est inférieure à la proportion massique du composé métallique dans la composition molluscicide.

7. Composition selon l'une des revendications 1 à 6, **caractérisée en ce qu'**elle comprend de l'ordre de 2 % en masse de phosphate de fer, de l'ordre de 4 % en masse d'EDTA et de l'ordre de 1 % en masse de métaldéhyde.

8. Composition selon l'une des revendications 1 à 7, **caractérisée en ce qu'**elle comprend au moins un excipient comestible pour les mollusques nuisibles.

9. Appât de lutte contre des mollusques nuisibles comprenant une composition selon l'une des revendications 1 à 8.

10. Appât selon la revendication 9, **caractérisé en ce qu'**il est sous forme d'un solide à l'état divisé.

11. Appât selon la revendication 10, **caractérisé en ce qu'**il est sous forme de particules solides et **en ce que** le métaldéhyde est présent dans au moins une fraction desdites particules avec une proportion massique sensiblement constante dans tout le volume d'au moins une fraction des particules.

12. Appât selon la revendication 10, **caractérisé en ce qu'**il est sous forme de particules solides et **en ce que** le métaldéhyde est présent dans au moins une fraction desdites particules avec une proportion massique variant dans le volume de ladite fraction de particules et vers l'intérieur de la matière solide de ladite fraction de particules.

13. Procédé de lutte contre des mollusques nuisibles dans lequel on met une quantité d'appât selon l'une des revendications 9 à 12 à disposition de mollusques nuisibles sur une surface de culture agricole à traiter.

14. Utilisation d'un appât de lutte contre des mollusques nuisibles selon l'une des revendications 9 à 12, **caractérisée en ce que** les mollusques nuisibles sont choisis dans le groupe formé des limaces, des escargots terrestres et des escargots aquatiques.

## Patentansprüche

1. Zusammensetzung, molluskizide Zusammensetzung genannt, die für schädliche Weichtiere durch Verschlucken tödlich ist, die als Wirkstoff gegen die schädlichen Weichtiere umfasst:
- wenigstens eine Verbindung, Metallverbindung genannt, ausgewählt aus der Gruppe, die gebildet wird von Eisenacetat, Eisenchlorid, Eisenphosphat, Eisen- und Natriumphosphat, Eisenpyrophosphat, Eisennitrat, Eisensulfat, Eisen- und Ammoniumsulfat, Eisenproteinen, Eisensulfiden, Eisencitrat, Glycerin- und Eisenphosphaten, Cholin- und Eisencitrat, Ammonium- und Eisencitrat, Eisenfumarat, Eisengluconat, Eisenlactat, Eisen- und Saccharosekomplexen, Eisen- und Fruktosekomplexen, Eisen- und Dextrosekomplexen, Eisensuccinat, Eisentartrat, Eisenoxalat, Eisenascorbat und Eisenaspartat;
- Metaldehyd;
**dadurch gekennzeichnet, dass** das Metaldehyd in der molluskiziden Zusammensetzung mit einem Gewichtsanteil im Bereich zwischen 0,5 % und 2 % vorhanden ist.

2. Zusammensetzung nach Anspruch 1, **dadurch gekennzeichnet, dass** sie wenigstens ein Mittel, Komplexierungsmittel genannt, umfasst, ausgewählt aus der Gruppe, die gebildet wird von organischen Polysäuren, Salzen von organischer Polysäure, Estern von organischer Polysäure und Mischungen von wenigstens zwei davon in beliebigen Anteilen.

3. Zusammensetzung nach einem der Ansprüche 1 oder 2, **dadurch gekennzeichnet, dass** der Wirkstoff in der molluskiziden Zusammensetzung mit einem Gewichtsanteil im Bereich zwischen 0,5 % und 10 % vorhanden ist.

4. Zusammensetzung nach einem der Ansprüche 2 bis 3, **dadurch gekennzeichnet, dass** die Metallverbindung und das Komplexierungsmittel in der molluskiziden Zusammensetzung mit einem Molverhältnis des Metalls der Metallverbindung und des Komplexierungsmittels im Bereich zwischen 1/0,1 und 1/10 vorhanden sind.

5. Zusammensetzung nach einem der Ansprüche 1 bis 4, **dadurch gekennzeichnet, dass** die Metallverbindung in der molluskiziden Zusammensetzung mit einem Gewichtsanteil im Bereich zwischen 0,5 % und 5 % vorhanden ist.

6. Zusammensetzung nach einem der Ansprüche 1 bis 5, **dadurch gekennzeichnet, dass** der Gewichtsanteil von Metaldehyd in der molluskiziden Zusammensetzung kleiner ist als der Gewichtsanteil der Metallverbindung in der molluskiziden Zusammensetzung.

7. Zusammensetzung nach einem der Ansprüche 1 bis 6, **dadurch gekennzeichnet, dass** sie in der Größenordnung von 2 Gew.-% Eisenphosphat, in der Größenordnung von 4 Gew.-% EDTA und in der Größenordnung von 1 Gew.-% Metaldehyd umfasst.

8. Zusammensetzung nach einem der Ansprüche 1 bis 7, **dadurch gekennzeichnet, dass** sie wenigstens ein für die schädlichen Weichtiere genießbares Excipiens umfasst.

9. Köder zur Bekämpfung von schädlichen Weichtieren, der eine Zusammensetzung nach einem der Ansprüche 1 bis 8 umfasst.

10. Köder nach Anspruch 9, **dadurch gekennzeichnet, dass** er in Form eines Feststoffs in zerteiltem Zustand ist.

11. Köder nach Anspruch 10, **dadurch gekennzeichnet, dass** er in Form von festen Teilchen ist und dadurch, dass das Metaldehyd in wenigstens einem Bruchteil der Teilchen mit einem Gewichtsanteil vorhanden ist, der im Wesentlichen in dem gesamten Volumen von wenigstens einem Bruchteil der Teilchen konstant ist.

12. Köder nach Anspruch 10, **dadurch gekennzeichnet, dass** er in Form von festen Teilchen ist und dadurch, dass das Metaldehyd in wenigstens einem Bruchteil der Teilchen mit einem Gewichtsanteil vorhanden ist, der in dem Volumen des Bruchteils der Teilchen und zum Inneren des Feststoffs des Bruchteils von Teilchen hin variiert.

13. Verfahren zur Bekämpfung von schädlichen Weichtieren, bei dem eine Menge von Köder nach einem der Ansprüche 9 bis 12 schädlichen Weichtieren auf einer zu behandelnden landwirtschaftlichen Anbaufläche bereitgestellt wird.

14. Verwendung eines Köders zur Bekämpfung von schädlichen Weichtieren nach einem der Ansprüche 9 bis 12, **dadurch gekennzeichnet, dass** die schädlichen Weichtiere ausgewählt sind aus der Gruppe, die von Nacktschnecken, Landschnecken und Wasserschnecken gebildet wird.

## Claims

1. Composition, called molluscicide composition, lethal to mollusc pests by ingestion, including the following active constituents against mollusc pests:
- at least one compound, called metallic compound, chosen from the group composed of iron acetate, iron chloride, iron phosphate, iron and sodium phosphate, iron pyrophosphate, iron nitrate, iron sulphate, iron and ammonium sulphate, ferroproteins, iron sulphides, iron citrate, glycerol and iron phosphates, choline and iron citrate, ammonium and iron citrate, iron fumarate, iron gluconate, iron lactate, iron and saccharose complexes, iron and fructose complexes, iron and dextrose complexes, iron succinate, iron tartrate, iron oxalate, iron ascorbate and iron aspartate;
- metaldehyde;
**characterised in that** the metaldehyde is present in the molluscicide composition with a proportion by mass equal to between 0.5% and 2%.

2. Composition according to claim 1, **characterised in that** it comprises at least one agent called the complexing agent chosen from the group composed of organic polyacids, organic polyacid salts, organic polyacid esters and mixes of at least two of these agents in any proportions.

3. Composition according to one of claims 1 or 2, **characterised in that** the active material is present in the molluscicide composition in a proportion by mass equal to between 0.5% and 10%.

4. Composition according to one of claims 2 to 3, **characterised in that** the metallic compound and the complexing agent are present in the molluscicide composition with a molar ratio between the metallic compound and the complexing agent equal to between 1/0.1 and 1/10.

5. Composition according to one of claims 1 to 4, **characterised in that** the metallic compound is present in the molluscicide composition with a proportion by mass equal to between 0.5% and 5%.

6. Composition according to one of claims 1 to 5, **characterised in that** proportion by mass of metaldehyde in the molluscicide composition is less than the proportion by mass of the metallic compound in the molluscicide composition.

7. Composition according to one of claims 1 to 6, **characterised in that** it comprises of the order of 2% by mass of iron phosphate, of the order or 4% by mass of EDTA and of the order of 1% by mass of metaldehyde.

8. Composition according to one of claims 1 to 7, **characterised in that** it comprises at least one excipient edible for mollusc pests.

9. Bait for the struggle again mollusc pests including a composition according to one of claims 1 to 8.

10. Bait according to claim 9, **characterised in that** it is in the form of a solid in the divided state.

11. Bait according to claim 10, **characterised in that** it is in the form of solid particles and **in that** the metaldehyde is present in at least a fraction of said particles with an approximately constant proportion by mass throughout the volume of at least a fraction of the particles.

12. Bait according to claim 10, **characterised in that** it is in the form of solid particles and **in that** the metaldehyde is present in at least a fraction of said particles with a variable proportion by mass in the volume of said fraction of particles, and towards the interior of the solid material of said fraction of particles.

13. Method for the struggle against mollusc pests in which a quantity of bait is added according to one of claims 9 to 12 available to molluscs over an area of agricultural crops to be treated.

14. Use of bait against mollusc pests according to one of claims 9 to 12, **characterised in that** the mollusc pests are chosen from the group composed of slugs, land snails and water snails.
